(19) Europäisches Patentamt / European Patent Office / Office européen des brevets

(11) **EP 4 394 699 A1**

(12) **EUROPEAN PATENT APPLICATION**
published in accordance with Art. 153(4) EPC

(43) Date of publication:
**03.07.2024 Bulletin 2024/27**

(21) Application number: **23787583.6**

(22) Date of filing: **07.04.2023**

(51) International Patent Classification (IPC):
***G06T 7/207*** *(2017.01)*

(52) Cooperative Patent Classification (CPC):
**G06T 7/207**

(86) International application number:
**PCT/CN2023/086772**

(87) International publication number:
**WO 2023/197938 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.04.2022 CN 202210391409**

(71) Applicants:
- **Huawei Technologies Co., Ltd.**
  **Shenzhen, Guangdong 518129 (CN)**
- **Tsinghua University**
  **Beijing 100084 (CN)**

(72) Inventors:
- **CHEN, Hongwei**
  **Beijing 100084 (CN)**
- **LIANG, Yu**
  **Beijing 100084 (CN)**
- **HUANG, Honghao**
  **Beijing 100084 (CN)**
- **LI, Jingwei**
  **Shenzhen, Guangdong 518129 (CN)**
- **DONG, Xiaowen**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **DYNAMIC SCENE PROCESSING METHOD AND APPARATUS, AND NEURAL NETWORK MODEL TRAINING METHOD AND APPARATUS**

(57) This application provides a dynamic scene processing method and apparatus, and a neural network model training method and apparatus, and relates to the field of artificial intelligence. The method includes: obtaining time domain spectral data $X(\omega, x, y)$ of a dynamic scene, where $\omega$ indicates a frequency domain dimension of the dynamic scene along a time direction, and $x$ and $y$ indicate spatial dimensions of the dynamic scene; and using the time domain spectral data as an input of a neural network model, to obtain a processing result of the dynamic scene. In this application, precision of the processing result of the dynamic scene can be improved.

S601: Obtain time domain spectral data $X(\omega, x, y)$ of a dynamic scene, where $\omega$ indicates a frequency domain dimension of the dynamic scene along a time direction, and x and y indicate spatial dimensions of the dynamic scene

S602: Use the time domain spectrum data as an input of a neural network model, to obtain a processing result of the dynamic scene

FIG. 6

**Description**

This application claims priority to Chinese Patent Application No. 202210391409.5, filed with the China National Intellectual Property Administration on April 14, 2022, and entitled "DYNAMIC SCENE PROCESSING METHOD AND APPARATUS, AND NEURAL NETWORK MODEL TRAINING METHOD AND APPARATUS", which is incorporated herein by reference in its entirety.

**TECHNICAL FIELD**

This application relates to the field of artificial intelligence, and more specifically, to a dynamic scene processing method and apparatus, and a neural network model training method and apparatus.

**BACKGROUND**

Artificial intelligence (artificial intelligence, AI) refers to a theory, method, technology, and application system that are used to simulate, extend, and expand human intelligence by using a digital computer or a machine controlled by a digital computer, to perceive an environment, obtain knowledge, and obtain an optimal result by using the knowledge. In other words, artificial intelligence is a branch of computer science, and seeks to learn essence of intelligence and produce a new intelligent machine that can react in a way similar to human intelligence. Research on the field of artificial intelligence includes robotics, natural language processing, computer vision, decision-making and inference, human-machine interaction, recommendation and search, AI basic theories, and the like.

Processing of a dynamic scene in the computer vision is generally that a sequence, in other words, video data of the dynamic scene including two-dimensional pictures shot by a camera frame by frame is directly input to a dynamic scene processing model for training, to obtain a trained dynamic scene processing model. Then, to-be-processed video data of the dynamic scene is directly used as an input of the trained dynamic scene processing model, to obtain a processing result. Although a good processing result of the dynamic scene can be obtained by using the dynamic scene processing model based on a neural network, when the video data of the dynamic scene is directly used as the input of the dynamic scene processing model, an association relationship of the to-be-processed video data, in time domain, of the dynamic scene is not fully utilized, and precision of the processing result of the dynamic scene is limited.

Therefore, how to improve precision of the processing result of the dynamic scene is an urgent problem to be resolved.

**SUMMARY**

This application provides a dynamic scene processing method and apparatus, and a neural network model training method and apparatus, to improve precision of a processing result of a dynamic scene.

According to a first aspect, a dynamic scene processing method is provided. The method includes: obtaining time domain spectral data $X(\omega, x, y)$ of a dynamic scene, where $\omega$ indicates a frequency domain dimension of the dynamic scene along a time direction, and $x$ and $y$ indicate spatial dimensions of the dynamic scene; and using the time domain spectral data as an input of a neural network model, to obtain a processing result of the dynamic scene.

It should be understood that the time domain spectral data may indicate change frequency of the dynamic scene in time domain, or may indicate a distribution status of the dynamic scene in space.

In a possible implementation, the time domain spectral data of the dynamic scene may be initial time domain spectral data of the dynamic scene, or may be data updated based on the initial time domain spectral data. This is not limited in embodiments of this application.

In this embodiment of this application, the time domain spectral data is used as input data of a specific processing task of the dynamic scene, and is input to a corresponding trained neural network model for task processing. Compared with a processing result obtained in a conventional method in which video data of the dynamic scene is directly used as the input data of the specific processing task, the processing result obtained in the method is more accurate. Specifically, for an action recognition task in the dynamic scene, precision of a recognition result obtained in the manner in this embodiment of this application is higher. For a prediction task of a next frame of dynamic scene, a prediction result obtained in the manner in this embodiment of this application is more accurate.

In some implementations, the obtaining time domain spectral data $X(\omega, x, y)$ of a dynamic scene includes: using first time domain spectral data as an input of a frequency domain channel selection model, to obtain a frequency domain weight vector, where the frequency domain weight vector indicates weights of different frequency domain channels; and updating the first time domain spectral data based on the frequency domain weight vector and the first time domain spectral data, to obtain the time domain spectral data of the dynamic scene.

It should be understood that the first time domain spectral data is the initial time domain spectral data of the dynamic scene.

In this embodiment of this application, the frequency domain weight vector is obtained by using the trained frequency domain channel selection model, to update the first time domain spectral data, thereby retaining a useful frequency channel in the first time domain spectral data, and removing a useless frequency channel. In this way, an amount of data used for a specific task in a subsequent dynamic scene is reduced, a computing speed is improved, storage space is reduced, and communication bandwidth pressure is reduced.

In some implementations, the time domain spectral data is obtained by using a time domain spectral data collection camera. For example, the time domain spectral data collection camera may be a discrete cosine transform camera.

In this embodiment of this application, to-be-recognized time domain spectral data of the dynamic scene is directly collected by using the time domain spectral data collection camera (for example, the discrete cosine transform camera). In comparison with a case in which the video data of the dynamic scene is collected by using a common two-dimensional array camera, and then transformation is performed on the video data, pressure on communication bandwidth and data storage can be reduced, and time domain spectral data of a high-speed dynamic scene can be obtained at low costs, thereby implementing recognition or frame prediction of the high-speed dynamic scene.

In a possible implementation, the video data of the dynamic scene is obtained, and first transformation is performed on the video data to obtain the time domain spectral data of the dynamic scene. The first transformation may be discrete Fourier transform, or may be discrete cosine transform. This is not limited in this embodiment of this application.

According to a second aspect, a neural network model training method is provided. The method includes: obtaining training data, where the training data is time domain spectral data $X(\omega, x, y)$ of a dynamic scene, $\omega$ indicates a frequency domain dimension of the dynamic scene along a time direction, and $x$ and $y$ indicate spatial dimensions of the dynamic scene; and training a to-be-trained neural network model based on the training data.

It should be understood that the time domain spectral data may indicate change frequency of the dynamic scene in time domain, or may indicate a distribution status of the dynamic scene in space.

In this embodiment of this application, the time domain spectral data of the dynamic scene is used as the training data to train the neural network model, so that time domain global information can be fully utilized, in other words, the time domain spectral data can reflect overall change frequency of the dynamic scene in time domain. For example, the time domain spectral data may reflect change frequency of walking and running in the dynamic scene. Therefore, a trained neural network model obtained based on the time domain spectral training data has higher precision in processing a corresponding task than a conventional trained neural network model obtained directly based on video data corresponding to the dynamic scene. Processing a corresponding task by using the trained neural network model in this embodiment of this application can improve accuracy of task processing. For example, in a dynamic scene action recognition task, the trained neural network model obtained based on the time domain spectral training data may have higher recognition precision. For another example, in a frame prediction task in the dynamic scene, the trained neural network model obtained based on the time domain spectral training data may have higher prediction accuracy.

In a possible implementation, the obtaining training data includes: obtaining video data of the dynamic scene, and performing a first change on the video data to obtain the training data. The first transformation may be discrete Fourier transform or discrete cosine transform. This is not limited in this embodiment of this application.

In some implementations, the to-be-trained neural network model is trained based on the training data, to obtain a first loss function. A frequency domain channel selection model is trained based on a constraint term and the training data, to output a frequency domain weight vector. The frequency domain weight vector indicates weights of different frequency domain channels, and the constraint term includes the first loss function. The training data is updated based on the frequency domain weight vector and the training data. The to-be-trained neural network model is trained based on updated training data and the frequency domain weight vector, to obtain updated first loss function.

In this embodiment of this application, the frequency domain channel selection model is trained, and the time domain spectral training data is selected on a frequency channel by using the frequency domain weight vector, so that a useful frequency channel is retained, and a useless frequency channel is removed. In this way, an amount of data used for a subsequent operation is reduced, a computing amount in a subsequent application phase is reduced, computing costs are reduced, a computing speed is improved, storage space is reduced, and communication bandwidth pressure is reduced.

According to a third aspect, a dynamic scene processing apparatus is provided, and the apparatus includes an obtaining unit and a processing unit. The obtaining unit is specifically configured to obtain time domain spectral data $X(\omega, x, y)$ of a dynamic scene, where $\omega$ indicates a frequency domain dimension of the dynamic scene along a time direction, and $x$ and $y$ indicate spatial dimensions of the dynamic scene. The processing unit is specifically configured to use the time domain spectral data as an input of a neural network model, to obtain a processing result of the dynamic scene.

It should be understood that the time domain spectral data may indicate change frequency of the dynamic scene in time domain, or may indicate a distribution status of the dynamic scene in space.

In a possible implementation, the time domain spectral data of the dynamic scene may be initial time domain spectral data of the dynamic scene, or may be data updated based on the initial time domain spectral data. This is not limited in this embodiment of this application.

In this embodiment of this application, the time domain spectral data is used as input data of a specific processing task of the dynamic scene, and is input to a corresponding trained neural network model for task processing. Compared with a processing result obtained in a conventional method in which video data of the dynamic scene is directly used as the input data of the specific processing task, the processing result obtained in the method is more accurate. Specifically, for an action recognition task in the dynamic scene, precision of a recognition result obtained in the manner in this embodiment of this application is higher. For a prediction task of a next frame of dynamic scene, a prediction result obtained in the manner in this embodiment of this application is more accurate.

In some implementations, the obtaining unit is specifically configured to: use first time domain spectral data as an input of a frequency domain channel selection model, to obtain a frequency domain weight vector, where the frequency domain weight vector indicates weights of different frequency domain channels; and update the first time domain spectral data based on the frequency domain weight vector and the first time domain spectral data, to obtain the time domain spectral data of the dynamic scene.

It should be understood that the first time domain spectral data is the initial time domain spectral data of the dynamic scene.

In this embodiment of this application, the frequency domain weight vector is obtained by using a trained frequency domain channel selection model, to update the first time domain spectral data, thereby retaining a useful frequency channel in the first time domain spectral data, and removing a useless frequency channel. In this way, an amount of data used for a specific task in a subsequent dynamic scene is reduced, a computing speed is improved, storage space is reduced, and communication bandwidth pressure is reduced.

In some implementations, the time domain spectral data is obtained by using a time domain spectral data collection camera. For example, the time domain spectral data collection camera may be a discrete cosine transform camera.

In this embodiment of this application, to-be-recognized time domain spectral data of the dynamic scene is directly collected by using a time domain spectral data collection camera (for example, a discrete cosine transform camera). In comparison with a case in which the video data of the dynamic scene is collected by using a common two-dimensional array camera, and then transformation is performed on the video data, pressure on communication bandwidth and data storage can be reduced, and time domain spectral data of a high-speed dynamic scene can be obtained at low costs, thereby implementing recognition or frame prediction of the high-speed dynamic scene.

In a possible implementation, the obtaining unit is configured to obtain the video data of the dynamic scene, and the processing unit is configured to perform the first transformation on the video data of the dynamic scene, to obtain the time domain spectral data. The first transformation may be discrete Fourier transform, or may be discrete cosine transform. This is not limited in this embodiment of this application.

According to a fourth aspect, a neural network model training apparatus is provided, and the apparatus includes an obtaining unit and a processing unit. The obtaining unit is specifically configured to obtain training data. The training data is time domain spectral data $X(\omega, x, y)$ of a dynamic scene, where $\omega$ indicates a frequency domain dimension of the dynamic scene along a time direction, and $x$ and $y$ indicate spatial dimensions of the dynamic scene. The processing unit is specifically configured to train a to-be-trained neural network model based on the training data.

It should be understood that the time domain spectral data may indicate change frequency of the dynamic scene in time domain, or may indicate a distribution status of the dynamic scene in space.

In this embodiment of this application, the time domain spectral data of the dynamic scene is used as the training data to train the neural network model, so that time domain global information can be fully utilized, in other words, the time domain spectral data can reflect overall change frequency of the dynamic scene in time domain. For example, the time domain spectral data may reflect change frequency of walking and running in the dynamic scene. Therefore, a trained neural network model obtained based on the time domain spectral training data has higher precision in processing a corresponding task than a conventional trained neural network model obtained directly based on video data corresponding to the dynamic scene. Processing a corresponding task by using the trained neural network model in this embodiment of this application can improve accuracy of task processing. For example, in a dynamic scene action recognition task, the trained neural network model obtained based on the time domain spectral training data may have higher recognition precision. For another example, in a frame prediction task in the dynamic scene, the trained neural network model obtained based on the time domain spectral training data may have higher prediction accuracy.

In a possible implementation, the obtaining unit is configured to obtain video data of the dynamic scene, and the processing unit is configured to perform a first change on the video data to obtain the training data. The first transformation may be discrete Fourier transform or discrete cosine transform. This is not limited in this embodiment of this application.

In some implementations, the obtaining unit is further specifically configured to: train the to-be-trained neural network model based on the training data, to obtain a first loss function; train a frequency domain channel selection model based on a constraint term and the training data, to output a frequency domain weight vector, where the frequency domain weight vector indicates weights of different frequency domain channels, and the constraint term includes the first loss function; update the training data based on the frequency domain weight vector and the training data; and train the to-be-trained neural network model based on updated training data and the frequency domain weight vector, to obtain updated first loss function.

In this embodiment of this application, the frequency domain channel selection model is trained, and the time domain spectral training data is selected on a frequency channel by using the frequency domain weight vector, so that a useful frequency channel is retained, and a useless frequency channel is removed. In this way, an amount of data used for a subsequent operation is reduced, a computing amount in a subsequent application phase is reduced, computing costs are reduced, a computing speed is improved, storage space is reduced, and communication bandwidth pressure is reduced.

According to a fifth aspect, a dynamic scene processing apparatus is provided. The apparatus includes: a memory, configured to store a program; and a processor, configured to execute the program stored in the memory. When the program stored in the memory is executed, the processor is configured to perform the method in the first aspect and any implementation of the first aspect.

The processor in the fifth aspect may be a central processing unit (central processing unit, CPU), or may be a combination of a CPU and a neural network operation processor. The neural network operation processor herein may include a graphics processing unit (graphics processing unit, GPU), a neural-network processing unit (neural-network processing unit, NPU), a tensor processing unit (tensor processing unit, TPU), and the like. The TPU is an artificial intelligence accelerator-specific integrated circuit customized by Google (Google) for machine learning.

According to a sixth aspect, a neural network model training apparatus is provided. The apparatus includes: a memory, configured to store a program; and a processor, configured to execute the program stored in the memory. When the program stored in the memory is executed, the processor is configured to perform the method in the second aspect and any implementation of the second aspect.

The processor in the sixth aspect may be a central processing unit, or may be a combination of a CPU and a neural network operation processor. The neural network operation processor herein may include a graphics processing unit, a neural-network processing unit, a tensor processing unit, and the like. The TPU is an artificial intelligence accelerator-specific integrated circuit customized by Google for machine learning.

According to a seventh aspect, a computer-readable medium is provided. The computer-readable medium stores program code executed by a device, and the program code is used to perform the method in any implementation of the first aspect or the second aspect.

According to an eighth aspect, a computer program product including instructions is provided. When the computer program product runs on a computer, the computer is enabled to perform the method in any implementation of the first aspect or the second aspect.

According to a ninth aspect, a chip is provided. The chip includes a processor and a data interface. The processor performs the method in any implementation of the first aspect or the second aspect by reading, through the data interface, instructions stored in a memory.

Optionally, in an implementation, the chip may further include the memory, and the memory stores the instructions. The processor is configured to execute the instructions stored in the memory; and when the instructions are executed, the processor is configured to perform the method in any implementation of the first aspect or the second aspect.

The chip may be specifically a field-programmable gate array (field-programmable gate array, FPGA) or an application-specific integrated circuit (application-specific integrated circuit, ASIC).

**BRIEF** DESCRIPTION OF DRAWINGS

FIG. 1 is a schematic diagram of an artificial intelligence main framework according to an embodiment of this application;

FIG. 2 is an example diagram of a structure of a convolutional neural network according to an embodiment of this application;

FIG. 3 is a system architecture 100 according to an embodiment of this application;

FIG. 4 is a schematic diagram of deployment of a training apparatus according to an embodiment of this application;

FIG. 5 is a schematic flowchart of a neural network model training method according to an embodiment of this application;

FIG. 6 is a schematic flowchart of a dynamic scene processing method according to an embodiment of this application;

FIG. 7 is a flowchart of another neural network model training method according to an embodiment of this application;

FIG. 8 is a schematic diagram of a training process of a frequency domain channel selection model according to an embodiment of this application;

FIG. 9 is a visualized schematic diagram of an $m^{th}$ spatial pixel of time domain spectral data before update according to an embodiment of this application;

FIG. 10 is a schematic diagram of a structure of a convolutional neural network according to an embodiment of this application;

FIG. 11 is a schematic diagram of an overall procedure of training a neural network model according to an embodiment of this application;

FIG. 12 is a flowchart of another neural network model training method according to an embodiment of this application;

FIG. 13 is a schematic diagram of a structure of a common two-dimensional array camera according to an embodiment of this application;

FIG. 14 is a schematic diagram of a structure of a discrete cosine transform camera according to an embodiment of this application;

FIG. 15 is a visualized schematic diagram of collecting time domain spectral data by using a DCT camera according to an embodiment of this application;

FIG. 16 is a schematic diagram of an overall procedure of applying a trained neural network model according to an embodiment of this application;

FIG. 17 is a schematic block diagram of a neural network model training apparatus according to an embodiment of this application;

FIG. 18 is a schematic block diagram of a dynamic scene processing apparatus according to an embodiment of this application;

FIG. 19 is a schematic block diagram of a neural network model training apparatus according to an embodiment of this application; and

FIG. 20 is a schematic block diagram of a dynamic scene processing apparatus according to an embodiment of this application.

## DESCRIPTION OF EMBODIMENTS

The following describes technical solutions of this application with reference to accompanying drawings.

Terms used in the following embodiments are merely intended to describe specific embodiments, but are not intended to limit this application. As used in the specification and the appended claims of this application, the singular expressions "a/an", "one", "said", "the above", "the" and "this" are intended to also include such expressions as "one or more", unless otherwise clearly indicated in the context. It should be further understood that in the following embodiments of this application, "at least one" and "one or more" refer to one, two, or more. The term "and/or" is used for describing an association relationship between associated objects, and indicates that three relationships may exist. For example, A and/or B may represent: Only A exists, both A and B exist, and only B exists, where A and B may be singular or plural. The character "/" generally indicates an "or" relationship between the associated objects.

Reference to "one embodiment" or "some embodiments" described in this specification means that a specific characteristic, structure or feature described in combination with this embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "comprise", "have", and their variants all mean "include but are not limited to", unless otherwise specifically emphasized in another manner.

Prefix words such as "first" and "second" used in embodiments of this application are merely used to distinguish between different described objects, and do not limit locations, sequences, priorities, quantities, or content of described objects. For example, different anonymous identity information is distinguished.

In embodiments of this application, descriptions such as "when...", "in a case of...", and "if" all mean that a device performs corresponding processing in an objective case, and are not limited to time, and the device is not required to perform a determining action during implementation. This does not mean that there is another limitation.

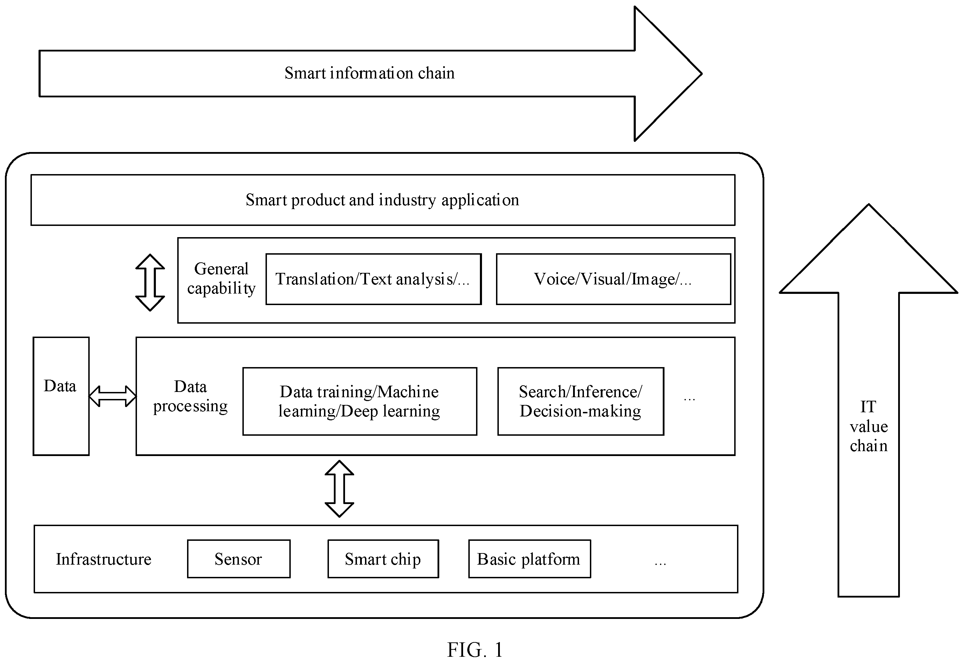

FIG. 1 is a schematic diagram of an artificial intelligence main framework. The main framework describes an overall working procedure of an artificial intelligence system, and is applicable to a general requirement of the artificial intelligence field.

The following describes in detail the artificial intelligence main framework from two dimensions: an "intelligent information chain" (a horizontal axis) and an "information technology (information technology, IT) value chain" (a vertical axis).

The "intelligent information chain" reflects a series of processes from data obtaining to processing. For example, the process may be a general process of intelligent information perception, intelligent information representation and formation, intelligent inference, intelligent decision making, and intelligent execution and output. In this process, the data undergoes a refinement process of "data-information-knowledge-intelligence".

The "IT value chain", from the underlying artificial intelligence infrastructure and information (provision and processing of technical realizations) to the system's industry ecosystem, reflects the value that artificial intelligence contributes to the information technology industry.

(1) Infrastructure:

The infrastructure provides computing capability support for the artificial intelligence system, implements communication with the external world, and implements support by using a basic platform.

The infrastructure can communicate with the outside by using a sensor, and a calculation capability of the infrastructure can be provided by an intelligent chip.

The intelligent chip herein may be a hardware acceleration chip, for example, a central processing unit (central processing unit, CPU), a neural-network processing unit (neural-network processing unit, NPU), a graphics processing unit (graphics processing unit, GPU), an application-specific integrated circuit (application-specific integrated circuit, ASIC), or a field programmable gate array (field programmable gate array, FPGA).

The basic platform of the infrastructure may include related platforms assurance and support such as a distributed computing framework and a network, and may include cloud storage and computing, an interconnection and interworking network, and the like.

For example, the infrastructure can communicate with the outside by using the sensor, to obtain data. Then, the data is provided to an intelligent chip in a distributed computing system provided by the basic platform, for computing.

(2) Data:

Data at an upper layer of the infrastructure indicates a data source in the artificial intelligence field. The data relates to a graph, an image, speech, and text, further relates to internet of things data of a conventional device, and includes service data of an existing system and perception data such as force, displacement, a liquid level, a temperature, and humidity.

(3) Data processing:

The data processing usually includes a processing manner, for example, data training, machine learning, deep learning, search, inference, or decision-making.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formal information according to an inference control policy. A typical function is searching and matching.

Decision making is a process of making a decision after intelligent information is inferred, and usually provides functions such as classification, ranking, and prediction.

(4) General capability:

After data processing mentioned above is performed on the data, some general capabilities may further be formed based on a data processing result. For example, the general capabilities may be an algorithm or a general system, for example, translation, text analysis, computer vision processing, speech recognition, and image recognition.

(5) Intelligent product and industrial application:

The intelligent product and industry application are a product and an application of the artificial intelligence system in various fields, and are a package of an overall solution of the artificial intelligence, so that decision-making for intelligent information is productized and an application is implemented. Application fields thereof mainly include intelligent manufacturing, intelligent transportation, intelligent home, intelligent healthcare, intelligent security, autonomous driving, a safe city, an intelligent terminal, and the like.

The video processing method in embodiments of this application may be applied to many fields of artificial intelligence, for example, fields such as intelligent manufacturing, intelligent transportation, intelligent home, intelligent healthcare, intelligent security, autonomous driving, and a safe city.

Specifically, embodiments of this application may be specifically applied to a field in which a (deep) neural network needs to be used, for example, dynamic scene recognition or dynamic scene frame prediction.

Because embodiments of this application relate to massive applications of a neural network, for ease of understanding, the following first describes terms and concepts related to embodiments of this application.

(1) Neural network

The neural network may include a neural unit. The neural unit may be an operation unit that uses $x_s$ and an intercept of 1 as an input. An output of the operation unit may be as follows:

$$h_{W,b}(x) = f(W^T x) = f(\sum_{s=1}^{n} W_s x_s + b)$$

s=1, 2, ..., or n, n is a natural number greater than 1, $W_s$ is a weight of $x_s$, and b is a bias of the neural unit.

Herein, f is an activation function (activation function) of the neural unit, and is used to introduce a non-linear characteristic into the neural network, to convert an input signal in the neural unit to an output signal. The output signal of the activation function may be used as an input of a next layer. For example, the activation function may be a ReLU, tanh, or sigmoid function.

The neural network is a network constituted by linking a plurality of single neural units together. To be specific, an output of a neural unit may be an input of another neural unit. An input of each neural unit may be connected to a local receptive field of a previous layer to extract a feature of the local receptive field. The local receptive field may be a region including several neural units.

(2) Convolutional neural network (convolutional neural network, CNN)

The convolutional neural network is a neural network with a convolution kernel. The convolution kernel may be considered as a filter. The convolutional layer is a neuron layer that is in the convolutional neural network and at which convolution processing is performed on an input signal. One convolutional layer usually includes several feature planes, and each feature plane may include some neural units that are in a rectangular arrangement.

(3) Recurrent neural network (recurrent neural network, RNN)

The recurrent neural network is used to process sequence data. A reason why the RNN is referred to as the recurrent neural network is that a current output of a sequence is also related to a previous output of the sequence. A specific representation form is that the network memorizes previous information and applies the previous information to calculation of the current output. To be specific, nodes at a hidden layer are connected, and an input of the hidden layer not only includes an output of the input layer, but also includes an output of the hidden layer at a previous moment.

(4) Transformer neural network

The transformer neural network is a kind of deep learning network, including self-attention mechanism and cross-attention mechanism, both the self-attention mechanism and the cross-attention mechanism mainly appear in a form of multi-head attention. The multi-head attention enables the transformer neural network to focus on information from different representation subspaces at different locations.

(5) Loss function

In a process of training a neural network, because it is expected that an output of the neural network is as close as possible to a value that actually needs to be predicted, a current predicted value of the network and an actually expected target value may be compared, and then a weight vector of each layer of the neural network is updated based on a difference between the current predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the actually expected target value or a value that more approximates the actually expected target value. Therefore, "how to obtain, through comparison, a difference between the predicted value and the target value" needs to be predefined. This is the loss function (loss function) or an objective function (objective function). The loss function and the objective function are important equations that measure the difference between the predicted value and the target value. The loss function is used as an example. A larger output value (loss) of the loss function indicates a larger difference. Therefore, training of the deep neural network is a process of minimizing the loss as much as possible. Generally, a smaller loss indicates higher training quality of the deep neural network, and a larger loss indicates lower training quality of the deep neural network. Similarly, smaller loss fluctuation indicates more stable of the training. Greater loss fluctuation indicates more unstable of the training.

(6) Edge device

The edge device is any device that has computing resources and network resources between a data generation source and a cloud center. For example, a mobile phone is an edge device between a person and the cloud center, and a gateway is an edge device between a smart household and the cloud center. In an ideal environment, the edge device is a device that analyzes or processes data in the vicinity of the data generation source. Because no data is transferred, network traffic and response time are reduced.

The edge device in embodiments of this application may be a mobile phone having a computing capability, a tablet personal computer (tablet personal computer, TPC), a media player, a smart household, a laptop computer (laptop computer, LC), a personal digital assistant (personal digital assistant, PDA), a personal computer (personal computer, PC), a camera, a video camera, a smartwatch, a wearable device (wearable device, WD), an autonomous driving vehicle, or the like. It can be understood that a specific form of the edge device is not limited in embodiments of this application.

(7) Digital mirror device (digital mirror device, DMD)

The DMD is a micro-electro-mechanical system with an electronic input and an optical output. The DMD includes many small aluminum mirror surfaces, and each small aluminum mirror surface is called a pixel. Micromirror units are independent individuals, and may flip different angles. Therefore, light reflected by the micromirror unit may present different angles, which are specifically reflected by brightness and darkness of a digital image pixel corresponding to the micromirror unit. Each micromirror unit has three steady states: a positive angle (for example, +12° or +10°), no angle (for example, 0°), and a negative angle (for example, -12° or - 10°). When the micromirror unit deviates from an equilibrium location +12° or +10°, the reflected light is imaged on a screen through a projection objective along a direction of an optical axis, forming a bright pixel. When the mirror deviates from the equilibrium location -12° or -10°, the reflected light does not pass through a projection lens, forming a dark pixel.

(8) Complementary metal-oxide semiconductor (complementary metal-oxide semiconductor, CMOS) image sensor

The CMOS image sensor usually includes an image sensor array row, a row driver, a column driver, a timing control logic, an AD converter, a data bus output interface, a control interface, and the like. These parts are usually integrated on a same silicon chip.

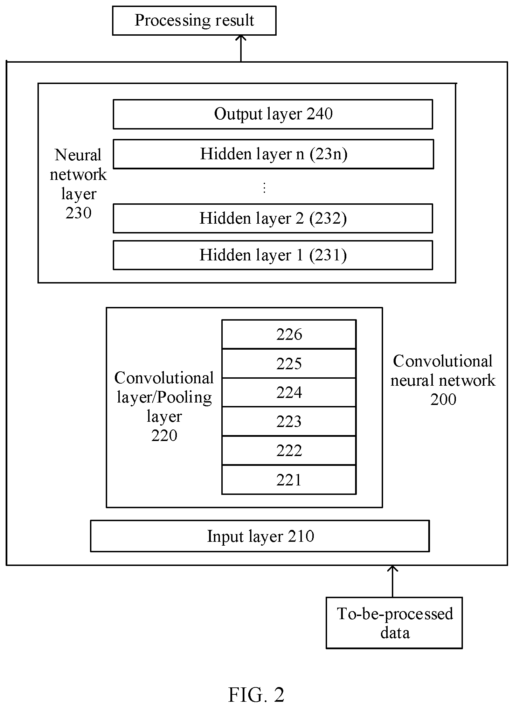

FIG. 2 is an example diagram of a structure of a convolutional neural network according to an embodiment of this application. As shown in FIG. 2, the convolutional neural network (CNN) 200 may include an input layer 210, a convolutional layer/pooling layer 220, and a neural network layer 230, where the pooling layer is optional. It should be understood that the following uses an example in which to-be-processed data in FIG. 2 is video data for description.

Convolutional layer/Pooling layer 220:

Convolutional layer:

As shown in FIG. 2, for example, the convolutional layer/pooling layer 220 may include layers 221 to 226. In an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, the layers 221 and 222 are convolutional layers, the layer 223 is a pooling layer, the layers 224 and 225 are convolutional layers, and the layer 226 is a pooling layer. To be specific, an output of a convolutional layer may be used as an input of a subsequent pooling layer, or may be used as an input of another convolutional layer to continue to perform a convolution operation.

A 2D convolutional neural network is used as an example. In video data processing, a convolution operation is separately performed on each frame of image of to-be-processed video data by using a CNN. The convolutional layer 221 is used as an example. The convolutional layer 221 may include a plurality of convolution operators, and the convolution operator is also referred to as a kernel. A function of the convolution kernel is equivalent to a filter that extracts specific information from an image matrix. The convolution operator may essentially be a weight matrix. The weight matrix is usually predefined. In a process of performing a convolution operation on an image, the weight matrix is usually used to process pixels at a granularity level of one pixel (or two pixels, depending on a value of a stride (stride)) in a horizontal direction on an input image, to extract a specific feature from the image. A size of the weight matrix should be related to a size of the image. It should be noted that a depth dimension (depth dimension) of the weight matrix is the same as a depth dimension of the image. During a convolution operation, the weight matrix extends to an entire depth of the image. Therefore, a convolution output of a single depth dimension is generated by performing convolution with a single weight matrix. However, in most cases, a plurality of weight matrices of a same dimension rather than a single weight matrix are applied. Outputs of the weight matrices are stacked to form a depth dimension of a convolutional image. Different weight matrices may be used to extract different features of the image. For example, one weight matrix is used to extract edge information of the image, another weight matrix is used to extract a specific color of the image, and still another weight matrix is used to blur an unnecessary noise in the image. Because the plurality of weight matrices have the same dimension, feature maps extracted by using the plurality of weight matrices with the same dimension also have a same dimension. Then, the plurality of extracted feature maps with the same dimension are combined to form an output of the convolution operation.

A weight in these weight matrices needs to be obtained through a large amount of training in actual application. Each weight matrix formed by using the weight obtained through training may be used to extract information from the image, to help the convolutional neural network 200 perform correct prediction.

When the convolutional neural network 200 has a plurality of convolutional layers, a larger quantity of general features are usually extracted at an initial convolutional layer (for example, the convolutional layer 221). The general features may also be referred to as low-level features. As a depth of the convolutional neural network 200 increases, a feature extracted at a more subsequent convolutional layer (for example, the convolutional layer 226) is more complex, for example, a high-level semantic feature. A feature with higher semantics is more applicable to a to-be-resolved problem.

Pooling layer:

A quantity of training parameters usually needs to be reduced, and therefore a pooling layer usually needs to be periodically used after a convolutional layer. To be specific, for the layers 221 to 226 used as examples for 220 in FIG. 2, one convolutional layer may be followed by one pooling layer, or a plurality of convolutional layers may be followed by one or more pooling layers. The pooling layer may include an average pooling operator and/or a maximum pooling operator, to perform sampling on the image to obtain an image with a small size. The average pooling operator may calculate a pixel value in an image in a specific range, to generate an average value. The maximum pooling operator may be used to select a pixel with a maximum value in a specific range as a maximum pooling result. In addition, just as the size of the weight matrix should be related to the size of the image at the convolutional layer, an operator also needs to be related to a size of an image at the pooling layer. A size of a processed image output from the pooling layer may be less than a size of an image input to the pooling layer. Each pixel in the image output from the pooling layer represents an average value or a maximum value of a corresponding sub-region of the image input to the pooling layer.

Neural network layer 230:

After processing performed at the convolutional layer/pooling layer 220, the convolutional neural network 200 still cannot output required output information. As described above, at the convolutional layer/pooling layer 220, only a feature is extracted, and parameters brought by the image are reduced. However, to generate final output information (needed classification information or other related information), the convolutional neural network 200 needs to use the neural network layer 230 to generate one output or one group of outputs whose quantity is equal to a quantity of needed classifications. Therefore, the neural network layer 230 may include a plurality of hidden layers (231, 232, ..., and 23n shown in FIG. 2) and an output layer 240. Parameters included in the plurality of hidden layers may be obtained through pre-training based on related training data of a specific task type. For example, the task type may include video action recognition.

The plurality of hidden layers in the neural network layer 230 are followed by the output layer 240, that is, a last layer in the entire convolutional neural network 200. The output layer 240 has a loss function similar to a classification cross-entropy, which is specifically used to calculate a prediction error. Once forward propagation (as shown in FIG. 2, propagation from 210 to 240 is the forward propagation) in the entire convolutional neural network 200 is completed, a weight and a deviation of each layer that are mentioned above start to be updated through back propagation (as shown in FIG. 2, propagation from 240 to 210 is the back propagation), to reduce a loss of the convolutional neural network 200 and an error between a result that is output by the convolutional neural network 200 by using the output layer and an ideal result.

It should be noted that the convolutional neural network 200 shown in FIG. 2 is merely used as an example of a convolutional neural network. During specific application, the convolutional neural network may alternatively be in a form of another network model. This is not limited in embodiments of this application.

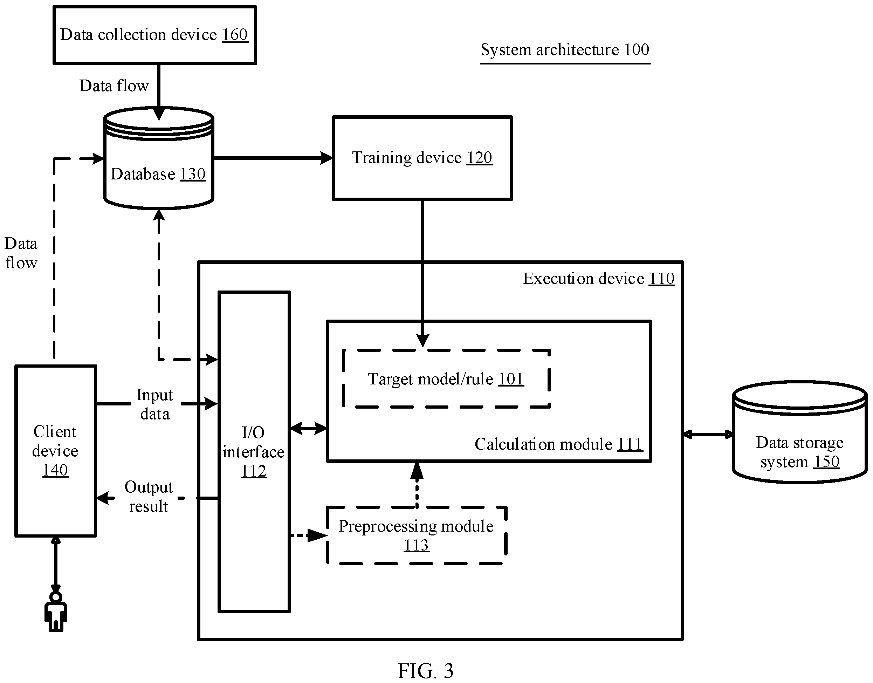

FIG. 3 is a system architecture 100 according to an embodiment of this application. In FIG. 3, a data collection device 160 is configured to collect training data. For example, for dynamic scene processing in this embodiment of this application, if the data is video data, the training data may include time domain spectral data corresponding to the training video and a corresponding result of the training video. For example, if dynamic scene action recognition training is performed on the video data, a corresponding result of the training video may be a dynamic scene recognition result of the training video. The dynamic scene recognition result may be an action classification result manually pre-labeled.

After the training data is collected, the data collection device 160 stores the training data in a database 130, and a training device 120 obtains a target model/rule 101 through training based on the training data maintained in the database 130.

The following describes how the training device 120 obtains the target model/rule 101 based on the training data. The training device 120 processes the input data, and compares an output value with a target value until a difference between the value output by the training device 120 and the target value is less than a specific threshold. In this way, training of the target model/rule 101 is completed.

The target model/rule 101 can be used to implement data processing in this embodiment of this application. The target model/rule 101 in this embodiment of this application may be specifically a neural network model, for example, a convolutional neural network, a recurrent neural network, or a transformer neural network. It should be noted that, during actual application, the training data maintained in the database 130 is not necessarily all collected by the data collection device 160, or may be received from another device. In addition, it should be noted that the training device 120 does not necessarily train the target model/rule 101 completely based on the training data maintained in the database 130, or may obtain training data from a cloud or another place to perform model training. The foregoing descriptions should not be construed as a limitation on embodiments of this application.

For example, a data set used in this embodiment of this application is a deep learning video data set, for example, a UCF101 human action data set. The UCF101 human action data set is an action recognition data set of a real action video, and the data set provides 13320 videos from 101 action categories. Each of the 101 action categories of videos is divided into 25 groups, and each group includes 4 to 7 videos. Videos belonging to a same group have common characteristics, for example, similar backgrounds.

The target model/rule 101 obtained through training by the training device 120 may be applied to different systems or devices, for example, an execution device 110 shown in FIG. 2. The execution device 110 may be a terminal, for example, a mobile phone terminal, a tablet computer, a laptop computer, an augmented reality (augmented reality, AR) AR/virtual reality (virtual reality, VR) terminal, or a vehicle-mounted terminal, or may be a server, a cloud, or the like. In FIG. 2, an input/output (input/output, I/O) interface 112 is configured in the execution device 110, and is configured to exchange data with an external device. A user may input data to the I/O interface 112 through a client device 140. In embodiments of this application, the input data may include to-be-processed data input by the client device.

Optionally, the execution device 110 may further include a preprocessing module 113. The preprocessing module 113 is configured to perform preprocessing based on the input data (for example, the video data) received by the I/O interface 112. If preprocessing does not need to be performed on the input data, the input data (for example, the time domain spectral data of the dynamic scene obtained through direct collection in this embodiment of this application) received from the I/O interface 112 is directly input to the execution device 110 for processing.

In a process in which the execution device 110 preprocesses the input data, or in a process in which a computing module 111 of the execution device 110 performs related processing such as computing, the execution device 110 may invoke data, code, and the like in a data storage system 150 for corresponding processing, and may further store, in the data storage system 150, data, instructions, and the like that are obtained through corresponding processing.

Finally, the I/O interface 112 returns a processing result, for example, a processing result of the obtained data, to the client device 140, to provide the processing result to the user.

It should be noted that the training device 120 may generate corresponding target models/rules 101 for different targets or different tasks based on different training data. The corresponding target models/rules 101 may be used to implement the foregoing targets or complete the foregoing tasks, to provide a required result for the user.

In a case shown in FIG. 3, the user may manually provide input data and the user may manually provide the input data in an interface provided by the I/O interface 112. In another case, the client device 140 may automatically send the input data to the I/O interface 112. If the client device 140 needs to obtain authorization from the user to automatically send the input data, the user may set corresponding permission in the client device 140. The user may view, on the client device 140, a result output by the execution device 110. The result may be specifically presented in a specific manner of displaying, a sound, an action, or the like. The client device 140 may alternatively be used as a data collection end, to collect, as new sample data, input data input to the I/O interface 112 and an output result output from the I/O interface 112 that are shown in the figure, and store the new sample data in the database 130. Certainly, the client device 140 may alternatively not perform collection. Instead, the I/O interface 112 directly stores, in the database 130 as new sample data, the input data input to the I/O interface 112 and the output result output from the I/O interface 112 that are shown in the figure.

It should be noted that FIG. 3 is merely a schematic diagram of a system architecture according to an embodiment of this application. A location relationship between the devices, the components, the modules, and the like shown in the figure does not constitute any limitation. For example, in FIG. 3, the data storage system 150 is an external memory relative to the execution device 110, but in another case, the data storage system 150 may alternatively be disposed in the execution device 110.

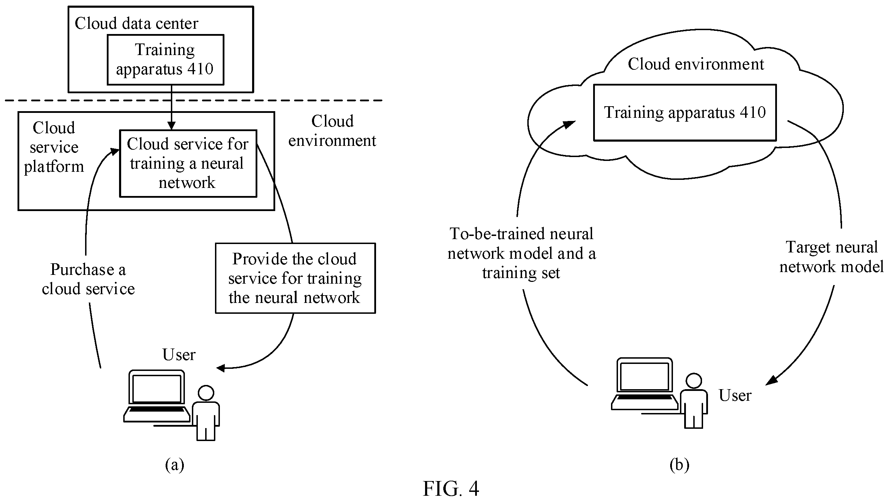

FIG. 4 is a schematic diagram of deployment of a training apparatus according to an embodiment of this application. As shown in (a) in FIG. 4, a training apparatus 410 may be deployed in a cloud environment. The cloud environment is an entity that uses a basic resource to provide a cloud service for a user in a cloud computing mode. The cloud environment includes a cloud data center and a cloud service platform. The cloud data center includes a large quantity of basic resources (including computing resources, storage resources, and network resources) owned by a cloud service provider. The computing resources included in the cloud data center may be a large quantity of computing devices (for example, servers).

The training apparatus 410 may be a server that trains a neural network model in the cloud data center, or may be a virtual machine that trains a neural network model.

The training apparatus 410 may alternatively be a software apparatus deployed on the server or the virtual machine in the cloud data center. The software apparatus is configured to train the neural network model. The software apparatus may be deployed on a plurality of servers in a distributed manner, or deployed on a plurality of virtual machines in a distributed manner, or deployed on the virtual machine and the server in a distributed manner.

As shown in FIG. 4, the training apparatus 410 may be abstracted by the cloud service provider on a cloud service platform into a cloud service for training the neural network model, and the cloud service is provided for the user. After the user purchases the cloud service on the cloud service platform, the cloud environment provides the cloud service for training a neural network for the user by using the cloud service.

For example, as shown in (b) in FIG. 4, the user may upload a to-be-trained neural network model (may further upload an original training set) to the cloud environment through an application program interface (application program interface, API) or a web page interface provided by the cloud service platform. The training apparatus 410 receives the to-be-trained neural network model and the training set, trains the to-be-trained neural network model, and returns a target neural network finally obtained through training to an edge device of the user. The edge device is described in detail in the foregoing. Details are not described herein.

For example, the user may upload a type of a target task to the cloud environment through the application program interface or the web page interface provided by the cloud service platform. Further, the user may upload the training set, and the training apparatus receives the type of the target task and the training set. The training apparatus 410 trains a neural network model (for example, a to-be-trained dynamic scene recognition model) corresponding to the type of the target task, and returns a target neural network model (for example, a target dynamic scene recognition model) finally obtained through training to the edge device of the user.

The training apparatus 410 may be deployed in the cloud environment as shown in (a) in FIG. 4. Alternatively, the training apparatus 410 may be a terminal device. In this case, the execution device 110 may be deployed on a user terminal side. This is not limited in this embodiment of this application.

Dynamic scene recognition means classifying actions in a dynamic scene, in other words, a computer automatically determines an action in a dynamic scene and outputs a classification result. Dynamic scene recognition is widely used in scenarios such as a smart city, smart healthcare, and production security monitoring.

Currently, input data for dynamic scene recognition is generally a sequence including two-dimensional pictures shot by a camera frame by frame, that is, video data. A general processing manner of dynamic scene recognition is that the video data is directly used as training data and input to the dynamic scene recognition model for training, to obtain a trained dynamic scene recognition model. Then, the to-be-recognized video data is directly input to the trained dynamic scene recognition model, to output a classification result.

A main disadvantage of the general processing manner of dynamic scene recognition is a contradiction between a minimum time interval represented by time resolution and an amount of data. The time resolution is a minimum time interval at which two observations are performed in a same area, and the time resolution of the camera may be understood as a minimum time interval at which the camera collects a dynamic scene. A camera with a low frame rate has low time resolution, in other words, a minimum time interval is large. Therefore, when the camera with a low frame rate is used to collect video data, an amount of data is small, and storage pressure of a device is small. However, when video data in which an object moves at a high speed is collected, a motion blur is generated, which is unfavorable to dynamic action recognition. A camera with a high frame rate has high time resolution, in other words, a minimum time interval is small. Therefore, when the camera with a high frame rate is used to collect video data in which an object moves at a high speed, a motion blur can be avoided. However, when collection time is fixed, compared with the camera with a low frame rate, the camera with a high frame rate collects a large amount of data. An excessively large amount of data imposes great pressure on communication bandwidth and storage. In addition, a calculation workload of action recognition increases, and a recognition rate is limited.

In addition, when the video data is directly used as an input of a neural network, association information of to-be-recognized video data in time domain is ignored, precision of an action classification result in a dynamic scene is limited, a large amount of redundant calculation is caused, and a classification speed is affected.

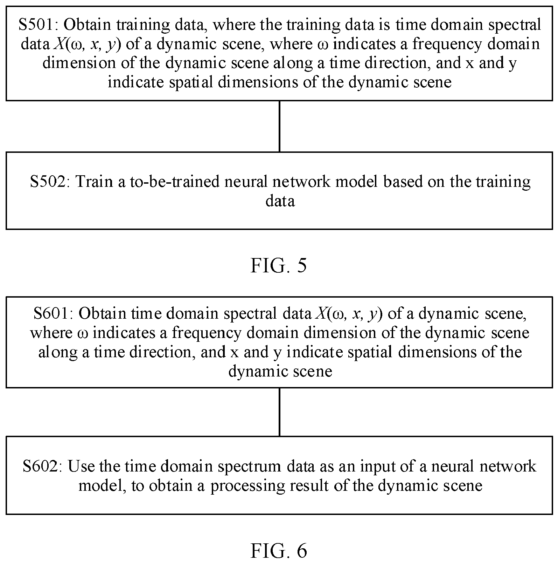

To resolve the foregoing problems, embodiments of this application provide a dynamic scene processing method and apparatus, and a neural network model training method and apparatus that are described in detail with reference to FIG. 5 to FIG. 20 in the following.

It should be understood that, for ease of understanding, meanings of two types of rectangles in FIG. 5 to FIG. 16 are described herein. A "right-angle rectangle" represents input data and output data, and a "rounded rectangle" represents a processing model of the input data, for example, the input data is processed by using a neural network.

The following first describes the method provided in this application from a model training side and a model application side with reference to FIG. 5 to FIG. 16.

The neural network model training method provided in embodiments of this application relates to computer vision processing, and may be specifically applied to a data processing method like data training, machine learning, and deep learning. Symbolic and formalized intelligent information modeling, feature extraction, training, and the like are performed on training data (for example, preprocessed video training data in this application), to finally obtain a trained neural network model. In addition, according to the dynamic scene processing method provided in embodiments of this application, the trained neural network model may be used to input the input data (for example, time domain spectral data obtained by preprocessing video data of a dynamic scene, or directly obtained time domain spectral data of a dynamic scene in this application) to the trained neural network model, to obtain output data (for example, a recognition result or a frame prediction result in this application). It should be noted that the neural network training method and the dynamic scene processing method that are provided in embodiments of this application are generated based on a same idea, or may be understood as two parts in a system or two phases, for example, a model training phase and a model application phase, of an overall procedure.

First, the neural network model training method is described in detail with reference to FIG. 5. FIG. 5 is a schematic flowchart of the neural network model training method according to an embodiment of this application.

S501: Obtain training data, where the training data is time domain spectral data $X(\omega, x, y)$ of a dynamic scene, $\omega$ indicates a frequency domain dimension of the dynamic scene along a time direction, and $x$ and $y$ indicate spatial dimensions of the dynamic scene.

It should be understood that dimensions of the time domain spectral data (time frequency data) are $C \times H \times W$, where C indicates a quantity of frequency channels of the time domain spectral data, H indicates a quantity of pixels along an x direction in space, and W indicates a quantity of pixels along a y direction in space. The time domain spectral data may indicate change frequency of the dynamic scene in time domain, or may indicate a distribution status of the dynamic scene in space.

In a possible implementation, video data of the dynamic scene is obtained, and first transformation is performed on the video data of the dynamic scene, to obtain the training data.

It should be understood that the video data may be obtained in a plurality of manners. The video data may be obtained from a UCF101 human action data set, or the video data of the dynamic scene is collected by using a common two-dimensional array camera. This is not limited in embodiments of this application. For example, the video data used to obtain the training data in this embodiment of this application comes from the UCF101 human action data set.

It should be noted that the first transformation is used to obtain the time domain spectral data of the video data. The first transformation may be discrete cosine transform (discrete cosine transform, DCT), discrete Fourier transform (discrete Fourier transform, DFT), or the like. A specific form of the first transformation is not limited in embodiments of this application.

For example, the obtained video data is the video data of the dynamic scene, and may be expressed as $D(t, x, y)$, where dimensions of the video data are $T \times M \times N$, T indicates a quantity of frames of the video data, M indicates a quantity of pixels along the x direction in space, and N indicates a quantity of pixels along the y direction in space. The first transformation, for example, the discrete cosine transform, is performed on each spatial pixel of the video data along a t direction, to obtain the training data, in other words, the time domain spectral data $X(\omega, x, y)$ of the video data is obtained.

S502: Train a to-be-trained neural network model based on the training data.

It should be understood that the to-be-trained neural network model may be a convolutional neural network, a recurrent neural network, a transformer neural network, or the like. A specific type of the to-be-trained neural network model is not limited in this application.

In this embodiment of this application, the time domain spectral data of the dynamic scene is used as the training data to train the neural network model, so that time domain global information can be fully utilized, in other words, the time domain spectral data can reflect overall change frequency of the dynamic scene in time domain. For example, the time domain spectral data may reflect change frequency of walking and running in the dynamic scene. Therefore, a trained neural network model obtained based on the time domain spectral training data has higher precision in processing a corresponding task than a conventional trained neural network model obtained directly based on the video data. Processing a corresponding task by using the trained neural network model in this embodiment of this application can improve accuracy of task processing. For example, in a dynamic scene action recognition task, the trained neural network model obtained based on the time domain spectral training data of the dynamic scene may have higher recognition precision. For another example, in a frame prediction task in the dynamic scene, the trained neural network model obtained based on the time domain spectral training data of the dynamic scene may have higher prediction accuracy.

The following describes a specific process of a dynamic scene processing method in detail with reference to FIG. 6. FIG. 6 is a schematic flowchart of a dynamic scene processing method according to an embodiment of this application.

S601: Obtain time domain spectral data $X(\omega, x, y)$ of a dynamic scene, where $\omega$ indicates a frequency domain dimension of the dynamic scene along a time direction, and $x$ and $y$ indicate spatial dimensions of the dynamic scene.

It should be noted that, to avoid repetition, for details of the time domain spectral data, refer to descriptions in S501. Details are not described herein again.

It should be understood that the time domain spectral data may be directly obtained time domain spectral data or time domain spectral data obtained through first transformation.

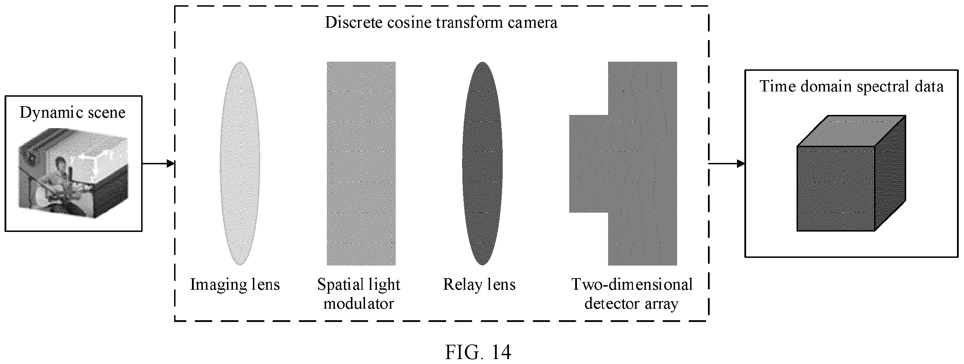

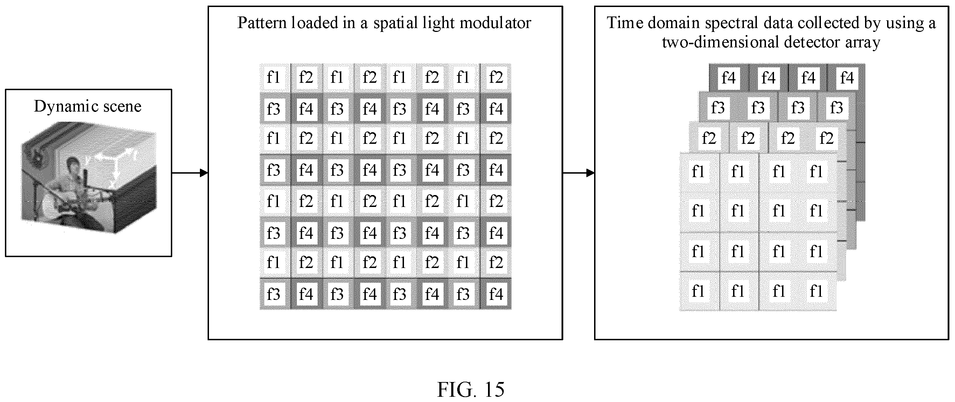

In a possible implementation, the time domain spectral data of the dynamic scene is obtained by using a time domain spectral data collection camera. The time domain spectral data collection camera may be a discrete cosine transform camera, or another camera that can directly obtain the time domain spectral data. This is not limited in this embodiment of this application. Subsequently, with reference to FIG. 14 and FIG. 15, that the time domain spectral data is directly obtained by using the discrete cosine transform camera is described in detail.

In a possible implementation, video data of the dynamic scene is obtained, and the first transformation is performed on the video data to obtain the time domain spectral data of the dynamic scene.

It should be noted that a specific manner of performing the first transformation is similar to a manner of obtaining the training data in a training process. To avoid repetition, details are not described herein again.

It should be further understood that the time domain spectral data may alternatively be updated first time domain spectral data.

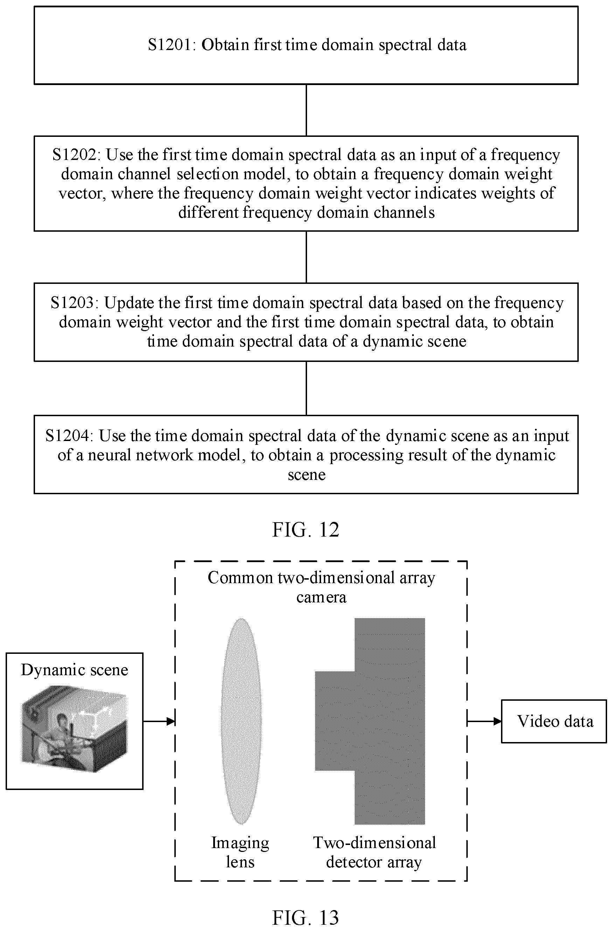

In a possible implementation, obtained first time domain spectral data is updated, to obtain the time domain spectral data of the dynamic scene processed by the neural network model. A specific update manner is described in detail with reference to FIG. 12.

S602: Use the time domain spectral data of the dynamic scene as an input of the neural network model, to obtain a processing result of the dynamic scene.

It should be noted that the neural network model in the dynamic scene processing method is obtained in the foregoing training manner.

It should be understood that a specific form of the processing result of the dynamic scene is determined by a specific processing task of the dynamic scene. For example, if an action in the video data is recognized, in other words, an action in the dynamic scene is recognized, the processing result of the dynamic scene is an action recognition result. For another example, if a next frame in the dynamic scene is predicted, in other words, a dynamic scene in a next frame is predicted, the processing result of the dynamic scene is a frame prediction result. The specific processing task of the dynamic scene is not limited in this embodiment of this application. In this embodiment of this application, action recognition of the dynamic scene is mainly used as an example for description.

In this embodiment of this application, the time domain spectral data is used as input data of a specific processing task of the dynamic scene, and is input to a corresponding trained neural network model for task processing. Compared with a processing result obtained in a conventional method in which video data is directly used as the input data of the specific processing task, the processing result obtained in the method is more accurate. Specifically, for an action recognition task in the dynamic scene, precision of a recognition result obtained in the manner in this embodiment of this application is higher. For a prediction task of a next frame of dynamic scene, a prediction result obtained in the manner in this embodiment of this application is more accurate.

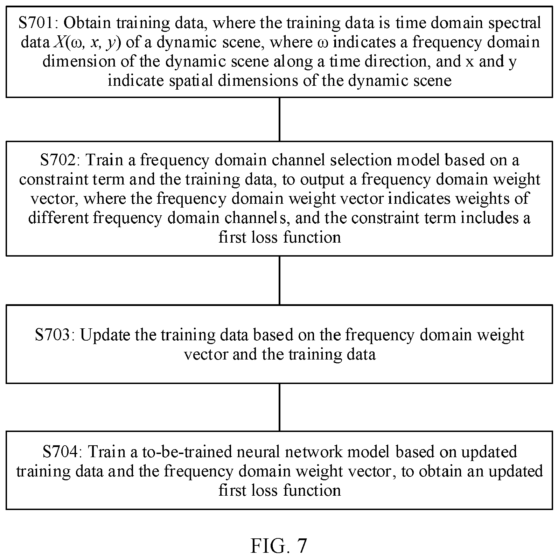

To further improve a speed of processing the dynamic scene and reduce computing costs, the foregoing manner is further improved in this embodiment of this application. Further improvement is described in detail below from a training phase and a dynamic scene processing phase of the neural network model with reference to FIG. 7 to FIG. 16.

The following describes in detail a training process of an improved neural network model with reference to FIG. 7 to FIG. 10. FIG. 7 is a flowchart of another neural network model training method according to an embodiment of this application.

S701: Obtain training data, where the training data is time domain spectral data $X(\omega, x, y)$ of a dynamic scene, $\omega$ indicates a frequency domain dimension of the dynamic scene along a time direction, and $x$ and $y$ indicate spatial dimensions of the dynamic scene.

It should be understood that S701 is the same as S501. To avoid repetition, details are not described herein again.

S702: Train a frequency domain channel selection model based on a constraint term and the training data, to output a frequency domain weight vector, where the frequency domain weight vector indicates weights of different frequency domain channels, and the constraint term includes a first loss function.

It should be understood that when initial iterative training is performed on the frequency domain channel selection module, the constraint term is an initial constraint, and the initial constraint may be predefined. For example, a specific value of the initial constraint may be 0, in other words, there is no initial constraint. A specific form of the initial constraint of the training data is not limited in this embodiment of this application.

When non-initial iterative training is performed on the frequency domain channel selection model, in other words, when $k^{th}$ iterative training is performed, where k is a positive integer greater than or equal to 2, the first loss function included in the constraint term is a first loss function output when a to-be-trained neural network model is trained during $(k-1)^{th}$ iterative training.

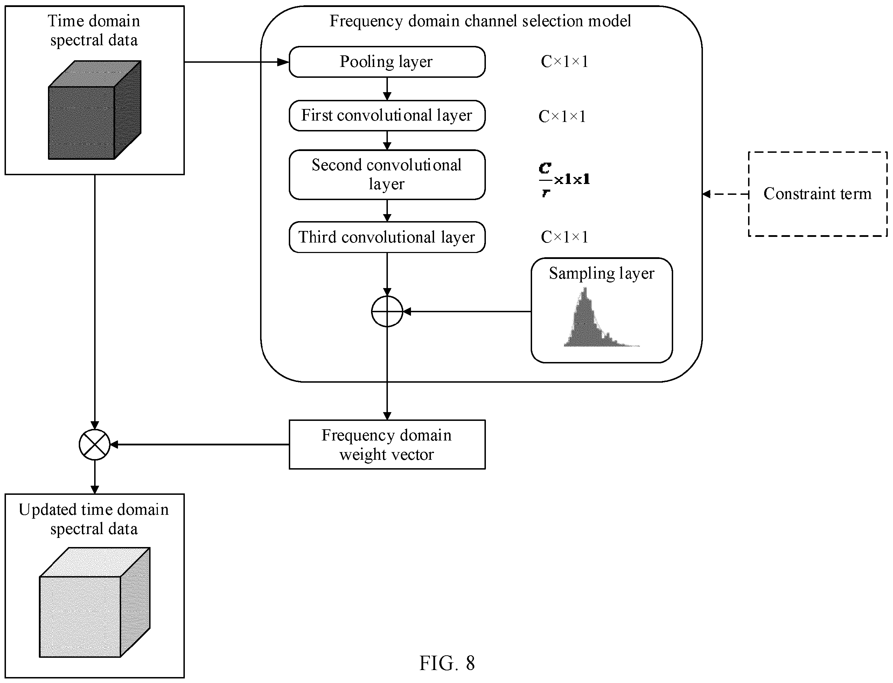

The following specifically describes a training process of the frequency domain channel selection model with reference to FIG. 8. FIG. 8 is a schematic diagram of a training process of a frequency domain channel selection model according to an embodiment of this application.

It should be noted that the frequency domain channel selection model is used to obtain the frequency domain weight vector of the time domain spectral data, to implement adaptive extraction of a frequency domain channel of the time domain spectral data, thereby retaining a useful frequency channel and removing a useless frequency channel. In this way, an amount of data used for a subsequent operation is reduced, to reduce an operation amount, storage space, and communication bandwidth pressure. A neural network structure of the frequency domain channel selection model may be any structure for implementing the foregoing functions. This is not limited in this embodiment of this application.

For example, the structure of the frequency domain channel selection model may be shown in FIG. 8. The frequency domain channel selection model includes a pooling layer (for example, an adaptive average pooling layer), three layers of convolutional layer and a sampling layer (for example, gumbel softmax sampling layer).

The training data and the constraint term are input to a to-be-trained frequency domain channel selection model, and the frequency domain weight vector is output. A frequency domain weight of each frequency channel may be represented by using a formula (1):

$$A_{ti} = G_s\left(W_{3,C}\left(W_{2,\frac{C}{r}}W_{1,C}\left(W_{ave}(X_i)\right)\right)\right) \tag{1}$$

$A_{ti}$ indicates an $i^{th}$ element of the frequency domain weight vector $A_t$, $X_i$ indicates an $i^{th}$ frequency channel of the time domain spectral data $X(\omega, x, y)$, where i=1, 2, 3, ..., C, and C indicates a quantity of frequency channels, where C is a positive integer. $W_{ave}$ indicates a weight of the adaptive average pooling layer, $W_{1,C}$ indicates a weight of a first convolutional layer, $W_{2,\frac{C}{r}}$ indicates a weight of a second convolutional layer, $W_{3,C}$ indicates a weight of a third convolutional layer, and $r$ indicates a scale factor. $G_s$ indicates gumbel softmax sampling.

It should be understood that training the to-be-trained frequency domain channel selection model based on the training data and the constraint term is essentially performing update training on the weight parameters in the obtained frequency domain weight vector. Therefore, to prevent overfitting and restrict the frequency domain weight vector by using the constraint term, a regular term further needs to be added to the first loss function (as shown in Formula (2)), in other words, the constraint term used for the frequency domain channel selection model training is obtained (as shown in Formula (3)).

$$L_{fi} = \lambda \times A_{ti} \tag{2}$$

$$L = L_{acc} + \sum_{i=1}^{C} L_{fi} \tag{3}$$

$L_{fi}$ indicates a regular constraint of the $i^{th}$ frequency channel, $\lambda$ indicates attention constraint strength of the frequency channel, and $L_{acc}$ indicates the first loss function. When a task of the neural network model is to recognize an action in the dynamic scene, the first loss function may also be referred to as a recognition precision loss function. For example, the recognition precision loss function may be a mean square error (mean square error, MSE) loss function, and $L$ indicates the constraint term.

S703: Update the training data based on the frequency domain weight vector and the training data.

Point multiplication (as shown in Formula (4)) is performed on the frequency domain weight vector and each pixel of the training data, to obtain updated training data.

$$S_j = A_t \times X_m \qquad (4)$$

$S_j$ indicates a value of a $j^{th}$ spatial pixel in the updated training data S($\omega$, x, y), $A_t$ indicates the frequency domain weight vector, and $X_m$ indicates a value of an $m^{th}$ spatial pixel in the time domain spectral data $X(\omega$, x, y) before update, where $j$ = 1,2, ... $H \times W$ and $m$ = 1,2, ... $H \times W$.

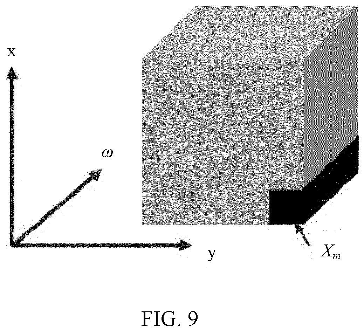

It should be noted that, it can be learned from S501 that the training data before update is the time domain spectral data $X(\omega$, x, y), and dimensions of the time domain spectral data are C×H×W, where C indicates a quantity of frequency channels of the time domain spectral data, H indicates a quantity of pixels along an x direction in space, W indicates a quantity of pixels along a y direction in space, and C, H, and W are positive integers. Therefore, dimensions of the $m^{th}$ spatial pixel of the training data before update are C×1×1. FIG. 9 is a visualized schematic diagram of the $m^{th}$ spatial pixel of the time domain spectral data before update according to an embodiment of this application. Dimensions of the frequency domain weight vector $A_t$ obtained according to S702 are also C×1×1, and dimensions of the updated training data are C×H×W.

S704: Train the to-be-trained neural network model based on the updated training data and the frequency domain weight vector, to obtain an updated first loss function.

The neural network model is trained based on the updated training data S($\omega$, x, y) obtained in S703 and the frequency domain weight vector $A_t$ obtained in S702, to obtain the updated first loss function. The updated first loss function is used to restrict training of the frequency domain channel selection model during $(k+1)^{th}$ iterative training.

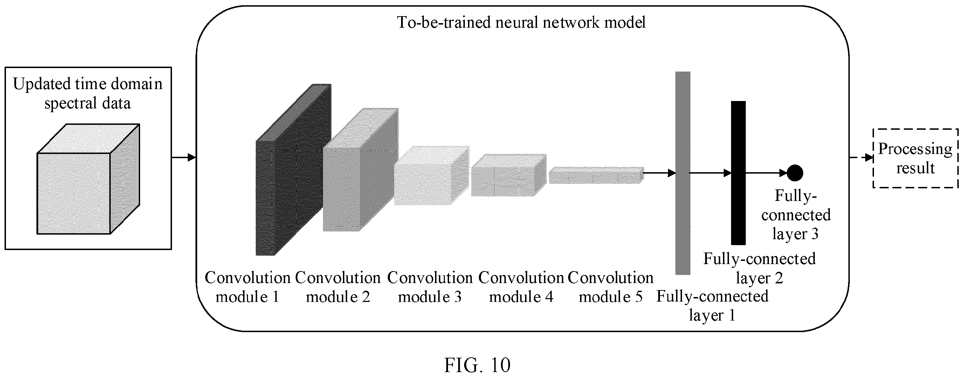

For example, the neural network model may be a convolutional neural network model. FIG. 10 is a schematic diagram of a structure of a convolutional neural network according to an embodiment of this application. The convolutional neural network shown in FIG. 10 includes five convolution modules and a fully connected module. Each convolution module includes a convolutional layer, a batch normalization layer, a non-linear layer, and a down-sampling layer, and the fully connected module includes three fully connected layers. The convolution module is configured to extract a feature of the updated training data. The fully connected module is configured to perform task processing based on a specific task type of the neural network model, for example, a dynamic scene action recognition action. The fully connected module is configured to classify the extracted feature.

It should be understood that, in the training phase, training the neural network model is essentially training weights of different layers in the neural network structure, to obtain a trained weight parameter of each layer.

In this embodiment of this application, the frequency domain channel selection model is trained, and the time domain spectral training data is selected on a frequency channel by using the frequency domain weight vector. This helps reduce an amount of data in a subsequent application phase, thereby reducing a computing amount in a subsequent application phase, reduce computing costs, and improve a computing speed.

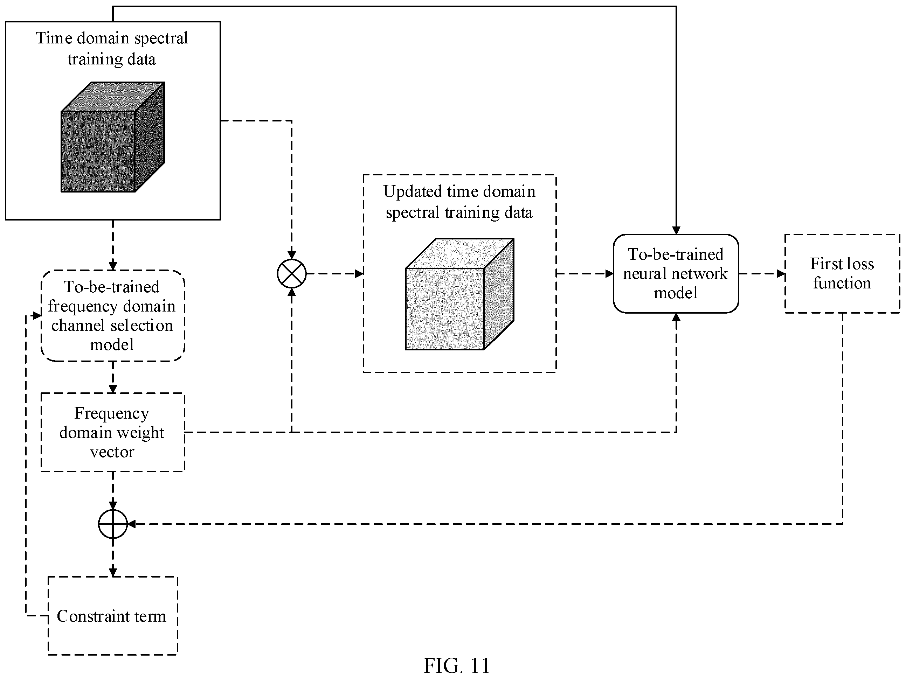

The following describes an overall training process of the foregoing neural network model with reference to FIG. 11. FIG. 11 is a schematic diagram of an overall procedure of training a neural network model according to an embodiment of this application.

It should be noted that in FIG. 11, a procedure connected by using a solid line is a neural network model training procedure, and a procedure connected by using a dashed line is another neural network model training procedure.

Training procedure 1: In the procedure connected by using the solid line shown in FIG. 11, the time domain spectral training data is directly input to the to-be-trained neural network model for training.

Training procedure 2: In the procedure connected by using the dashed line shown in FIG. 11. In a first step, in the $k^{th}$ iterative training, the time domain spectral training data and the constraint term are input to the to-be-trained frequency domain channel selection model for training, to output the frequency domain weight vector. The constraint term includes a common constraint of a frequency domain weight vector of the $(k-1)^{th}$ iterative training and a first loss function of the $(k-1)^{th}$ iterative training. In a second step, point multiplication is performed on the time domain spectral training data and the frequency domain weight vector, to obtain updated time domain spectral training data. The updated time domain spectral training data is training data selected by using a frequency channel. In a third step, the updated time domain spectral training data and the frequency domain weight vector obtained in the first step are input to a to-be-trained neural network model for training, to obtain an updated first loss function. The updated first loss function is used for training the frequency domain channel selection model in the first step in the $(k+1)^{th}$ iterative training.

The following describes in detail a training process of an improved neural network model with reference to FIG. 12 to FIG. 16. FIG. 12 is a flowchart of another neural network model training method according to an embodiment of this application.

S1201: Obtain first time domain spectral data.

In a possible implementation, video data of a dynamic scene is obtained, and first transformation is performed on the video data to obtain the first time domain spectral data. For a specific description of the first transformation, refer to S501.

For example, the video data of the dynamic scene is collected by using a common two-dimensional array camera. FIG. 13 is a schematic diagram of a structure of a common two-dimensional array camera according to an embodiment of this application. As shown in FIG. 13, the common two-dimensional array camera includes an imaging lens and a two-dimensional detector array (for example, a CMOS two-dimensional array camera). To-be-recognized video data of the dynamic scene is directly collected by using the common two-dimensional array camera.

In a possible implementation, time domain spectral data is obtained by using a time domain spectral data collection camera. The time domain spectral data collection camera may be a discrete cosine transform camera. The following describes in detail a principle of collecting the time domain spectral data of the dynamic scene by using the discrete cosine transform camera with reference to FIG. 14 and FIG. 15.

FIG. 14 is a schematic diagram of a structure of a discrete cosine transform camera according to an embodiment of this application. FIG. 15 is a visualized schematic diagram of collecting time domain spectral data by using a DCT camera according to an embodiment of this application.

As shown in FIG. 14, the discrete cosine transform camera includes an imaging lens, a spatial light modulator (for example, a digital mirror device DMD), a relay lens, and a two-dimensional detector array (for example, a CMOS two-dimensional array camera). A pixel of the DMD one-to-one corresponds to a pixel of the CMOS two-dimensional array camera. As shown in FIG. 15, data dimensions of a pattern loaded on the DMD are 8×8, and dimensions of time domain spectral data on the CMOS two-dimensional array camera are 4×4×4. The CMOS two-dimensional array camera has fixed exposure time, and in the fixed exposure time, a quantity of change times at different frequencies are different. For example, when the exposure time is 8 ms and f1 is 1 Hz, f1 indicates that a picture loaded on the DMD changes once within the exposure time of 8 ms. When f2 is 2 Hz, f2 indicates that the picture loaded on the DMD changes twice within the exposure time of 8 ms. When f3 is 3 Hz, f3 indicates that the picture loaded on the DMD changes three times within the exposure time of 8 ms. When f4 is 4 Hz, f4 indicates that the picture loaded on the DMD changes four times within the exposure time of 8 ms. For the CMOS two-dimensional array camera, all pixels at different frequencies may be collected within one period of exposure time. Therefore, patterns refreshed at different frequencies on the DMD are used as cosine bases (as shown in FIG. 15), to obtain time domain spectral data from the CMOS camera (as shown in FIG. 15).

Specifically, the dynamic scene may be considered as a three-dimensional space cube, a light intensity change at a location of each spatial pixel in the dynamic scene may be considered as a one-dimensional waveform signal, and the dynamic scene is projected onto the digital mirror device DMD by using the imaging lens. Subsequently, the waveform signal of each spatial pixel of the dynamic scene is multiplied by the cosine bases, at different frequencies, loaded on the DMD, and then passes through the relay lens to integrate on the CMOS two-dimensional array camera, to obtain the time domain spectral data $X(\omega, x, y)$.

In this embodiment of this application, the to-be-recognized time domain spectral data of the dynamic scene is directly collected by using the time domain spectral data collection camera (for example, the discrete cosine transform camera). In comparison with a case in which the video data of the dynamic scene is collected by using a common two-dimensional array camera, and then transformation is performed on the video data, pressure on communication bandwidth and data storage can be reduced, and time domain spectral data of a high-speed dynamic scene can be obtained at low costs, thereby implementing recognition or frame prediction of the high-speed dynamic scene.

S1202: Use the first time domain spectral data as an input of a frequency domain channel selection model, to obtain a frequency domain weight vector, where the frequency domain weight vector indicates weights of different frequency domain channels.

It should be noted that a weight parameter in the frequency domain channel selection model may be determined in a manner, in S702, that is shown in FIG. 8. In other words, in an application phase of the frequency domain channel selection model, the weight parameter in the frequency domain channel selection model is determined to be unchanged. Therefore, although a process of obtaining the frequency domain weight vector is similar to the process, in S702, that is shown in FIG. 8, no constraint term is required in an application process of the trained frequency domain channel selection model.

S1203: Update the first time domain spectral data based on the frequency domain weight vector and the first time domain spectral data, to obtain the time domain spectral data of the dynamic scene.

It should be noted that a specific process of updating the first time domain spectral data based on the frequency domain weight vector is similar to that in S703 in the training phase. To avoid repetition, details are not described herein again.

S 1204: Use the time domain spectral data of the dynamic scene as an input of the neural network model, to obtain a processing result of the dynamic scene.

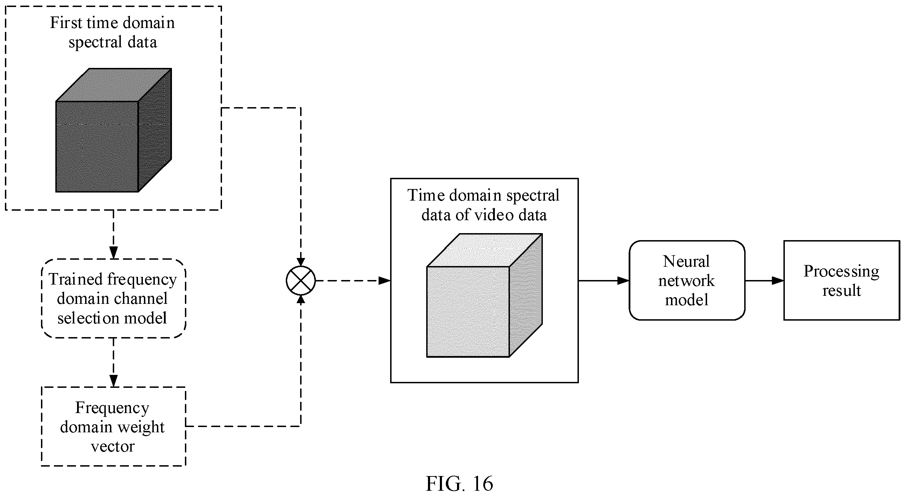

The following describes an overall process of applying the trained neural network model in embodiments of this application with reference to FIG. 16. FIG. 16 is a schematic diagram of an overall procedure of applying a trained neural network model according to an embodiment of this application.

It should be noted that, in FIG. 16, a procedure connected by using a solid line is an application procedure of a neural network model, and a procedure connected by using a dashed line is an application procedure of another neural network model.

Application procedure 1: In the procedure connected by using the solid line shown in FIG. 16, the time domain spectral data of the dynamic scene is directly input to the neural network model for task processing, to obtain a processing result, for example, an action recognition result of the dynamic scene.

Application procedure 2: In the procedure connected by using the dashed line shown in FIG. 16. In a first step, the first time domain spectral data is input to the frequency domain channel selection model, to output the frequency domain weight vector. In a second step, point multiplication is performed on the frequency domain weight vector output in the first step and the first time domain spectral data, to obtain the time domain spectral data of the dynamic scene. In a third step, the time domain spectral data of the dynamic scene is used as the input of the neural network model to obtain the processing result.

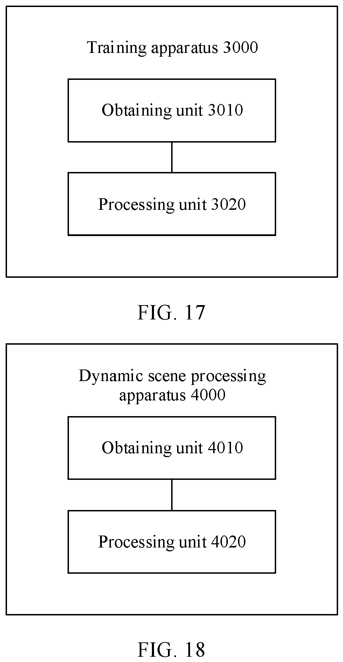

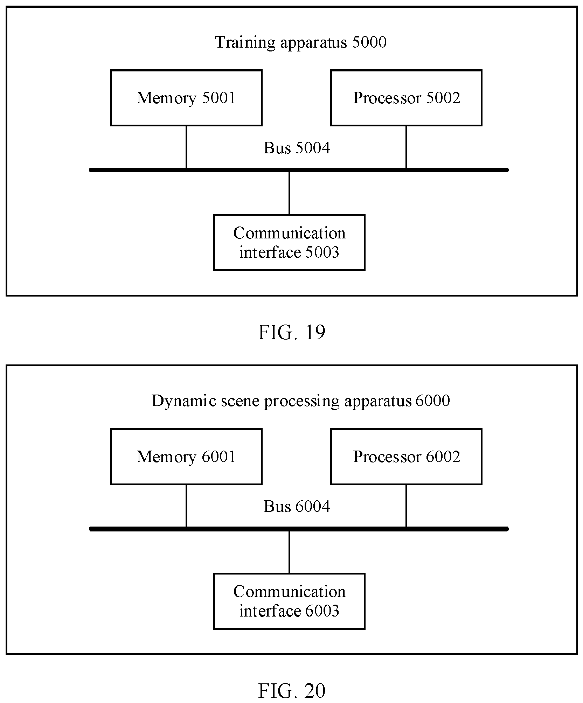

The following describes apparatuses in embodiments of this application with reference to FIG. 17 and FIG. 20. It should be understood that the following described apparatuses can perform the methods in the foregoing embodiments of this application. To avoid unnecessary repetition, repeated descriptions are appropriately omitted below when the apparatuses in embodiments of this application are described.

FIG. 17 is a schematic block diagram of a neural network model training apparatus according to an embodiment of this application. A neural network model training apparatus 3000 shown in FIG. 17 includes an obtaining unit 3010 and a processing unit 3020.

The obtaining unit 3010 is configured to obtain training data. The training data is time domain spectral data $X(\omega, x, y)$ of a dynamic scene, where $\omega$ indicates a frequency domain dimension of the dynamic scene along a time direction, and $x$ and $y$ indicate spatial dimensions of the dynamic scene.

The processing unit 3020 is configured to train a to-be-trained neural network model based on the training data.

FIG. 18 is a schematic block diagram of a dynamic scene processing apparatus 4000 according to an embodiment of this application. The dynamic scene processing apparatus 4000 shown in FIG. 18 includes an obtaining unit 4010 and a processing unit 4020.

The obtaining unit 4010 is configured to obtain time domain spectral data $X(\omega, x, y)$ of a dynamic scene, where $\omega$ indicates a frequency domain dimension of the dynamic scene along a time direction, and $x$ and $y$ indicate spatial dimensions of the dynamic scene.

The processing unit 4020 is configured to use the time domain spectral data of the dynamic scene as an input of the neural network model, to obtain a processing result of the dynamic scene.

It should be noted that the training apparatus 3000 and the apparatus 4000 are embodied in a form of functional units. The term "unit" herein may be implemented in a form of software and/or hardware. This is not specifically limited.

For example, the "unit" may be a software program, a hardware circuit, or a combination thereof that implements the foregoing function. The hardware circuit may include an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

Therefore, in the examples described in embodiments of this application, the units can be implemented by electronic hardware or a combination of computer software and electronic hardware. Whether the functions are performed by hardware or software depends on particular applications and design constraint constraints of the technical solutions. A person skilled in the art may use different methods to implement the described functions for each particular application, but it should not be considered that the implementation goes beyond the scope of this application.

FIG. 19 is a schematic diagram of a hardware structure of a neural network model training apparatus according to an embodiment of this application. A neural network model training apparatus 5000 shown in FIG. 19 (the apparatus 5000 may be specifically a computer device) includes a memory 5001, a processor 5002, a communication interface 5003, and a bus 5004. Communication connections between the memory 5001, the processor 5002, and the communication interface 5003 are implemented through the bus 5004.

The memory 5001 may be a read-only memory (read-only memory, ROM), a static storage device, a dynamic storage device, or a random access memory (random access memory, RAM). The memory 5001 may store a program. When the program stored in the memory 5001 is executed by the processor 5002, the processor 5002 is configured to perform steps in the neural network model training method in embodiments of this application. Specifically, the processor 5002 may perform step S502 in the method shown in FIG. 5, or perform steps S702 to S704 in the method shown in FIG. 7.

The processor 5002 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to implement the neural network model training method in method embodiments of this application.

The processor 5002 may alternatively be an integrated circuit chip and has a signal processing capability. In an implementation process, steps in the neural network model training method in this application may be completed by using a hardware integrated logic circuit in the processor 5002 or instructions in a form of software.

The processor 5002 may alternatively be a general-purpose processor, a digital signal processor (digital signal processor, DSP), an application-specific integrated circuit (ASIC), a field programmable gate array (field programmable gate array, FPGA) or another programmable logical device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the field, for example, a random access memory, a flash memory, a read-only memory, a programmable read-only memory, an electrically erasable programmable memory, or a register. The storage medium is located in the memory 5001. The processor 5002 reads information in the memory 5001, and completes, in combination with hardware of the processor 5002, functions that need to be performed by units included in the training apparatus shown in FIG. 17, or performs the neural network model training method shown in FIG. 5 or FIG. 7 in method embodiments of this application.

The communication interface 5003 uses, for example but not limited to, a transceiver apparatus of a transceiver type, to implement communication between the apparatus 5000 and another device or a communication network. For example, the training data may be obtained through the communication interface 5003.

The bus 5004 may include a path for transferring information between components (for example, the memory 5001, the processor 5002, and the communication interface 5003) of the apparatus 5000.

FIG. 20 is a schematic diagram of a hardware structure of a dynamic scene processing apparatus according to an embodiment of this application. A dynamic scene processing apparatus 6000 shown in FIG. 20 includes a memory 6001, a processor 6002, a communication interface 6003, and a bus 6004. Communication connections between the memory 6001, the processor 6002, and the communication interface 6003 are implemented through the bus 6004.

The memory 6001 may be a ROM, a static storage device, or a RAM. The memory 6001 may store a program. When the program stored in the memory 6001 is executed by the processor 6002, the processor 6002 and the communication interface 6003 are configured to perform steps in the data processing method in embodiments of this application. Specifically, the processor 6002 may perform step S1420 in the method shown in FIG. 14.

The processor 6002 may be a general-purpose CPU, a microprocessor, an ASIC, a GPU, or one or more integrated circuits, and is configured to execute a related program, to implement a function that needs to be executed by a unit in the data processing apparatus in embodiments of this application. Alternatively, the method in this application is implemented, for example, the dynamic scene processing method shown in FIG. 6 or FIG. 12.

The processor 6002 may alternatively be an integrated circuit chip and has a signal processing capability. In an implementation process, steps in the data processing method in embodiments of this application may be completed by using a hardware integrated logic circuit in the processor 6002 or instructions in a form of software.

The processor 6002 may alternatively be a general-purpose processor, a DSP, an ASIC, an FPGA or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the field, for example, a random access memory, a flash memory, a read-only memory, a programmable read-only memory, an electrically erasable programmable memory, or a register. The storage medium is located in the memory 6001. The processor 6002 reads information in the memory 6001, and completes, in combination with hardware of the processor 6002, functions that need to be performed by units included in the data processing apparatus in embodiments of this application, or performs the data processing method in the method embodiments of this application.

The communication interface 6003 uses, for example but not limited to, a transceiver apparatus of a transceiver type, to implement communication between the apparatus 6000 and another device or a communication network. For example, the time domain spectral data of the dynamic scene may be obtained by using the communication interface 6003.

The bus 6004 may include a path for transferring information between components (for example, the memory 6001, the processor 6002, and the communication interface 6003) of the apparatus 6000.

It should be noted that although only the memory, the processor, and the communication interface in the apparatus 5000 and the apparatus 6000 are illustrated, in a specific implementation process, a person skilled in the art should understand that the apparatus 5000 and the apparatus 6000 may further include another component necessary for proper running. In addition, based on a specific requirement, a person skilled in the art should understand that the apparatus 5000 and the apparatus 6000 may further include hardware components for implementing other additional functions. In addition, a person skilled in the art should understand that the apparatus 5000 and the apparatus 6000 may include only components necessary for implementing embodiments of this application, but not necessarily include all the components shown in FIG. 17 and FIG. 18.

It should be understood that, the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. For example but not for limitation, random access memories (random access memory, RAM) in many forms may be used, such as a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A dynamic scene processing method, comprising:

   obtaining time domain spectral data $X(\omega, x, y)$ of a dynamic scene, wherein $\omega$ indicates a frequency domain dimension of the dynamic scene along a time direction, and $x$ and $y$ indicate spatial dimensions of the dynamic scene; and
   using the time domain spectral data as an input of a neural network model, to obtain a processing result of the dynamic scene.

2. The method according to claim 1, wherein the obtaining time domain spectral data $X(\omega, x, y)$ of a dynamic scene comprises:

   using first time domain spectral data as an input of a frequency domain channel selection model, to obtain a frequency domain weight vector, wherein the frequency domain weight vector indicates weights of different frequency domain channels; and
   updating the first time domain spectral data based on the frequency domain weight vector and the first time domain spectral data, to obtain the time domain spectral data of the dynamic scene.

3. The method according to claim 1, wherein the time domain spectral data of the dynamic scene is obtained by using a time domain spectral data collection camera.

4. A neural network model training method, comprising:

   obtaining training data, wherein the training data is time domain spectral data $X(\omega, x, y)$ of a dynamic scene, $\omega$ indicates a frequency domain dimension of the dynamic scene along a time direction, and $x$ and $y$ indicate spatial dimensions of the dynamic scene; and
   training a to-be-trained neural network model based on the training data.

5. The method according to claim 4, wherein the method further comprises:

    training the to-be-trained neural network model based on the training data, to obtain a first loss function;
    training a frequency domain channel selection model based on a constraint term and the training data, to output a frequency domain weight vector, wherein the frequency domain weight vector indicates weights of different frequency domain channels, and the constraint term comprises the first loss function;
    updating the training data based on the frequency domain weight vector and the training data; and
    training the to-be-trained neural network model based on updated training data and the frequency domain weight vector, to obtain an updated first loss function.

6. A dynamic scene processing apparatus, wherein the apparatus comprises an obtaining unit and a processing unit, wherein

    the obtaining unit is specifically configured to obtain time domain spectral data $X(\omega, x, y)$ of a dynamic scene, wherein $\omega$ indicates a frequency domain dimension of the dynamic scene along a time direction, and $x$ and $y$ indicate spatial dimensions of the dynamic scene; and
    the processing unit is specifically configured to use the time domain spectral data as an input of a neural network model, to obtain a processing result of the dynamic scene.

7. The apparatus according to claim 6, wherein the obtaining unit is specifically configured to:

    use first time domain spectral data as an input of a frequency domain channel selection model, to obtain a frequency domain weight vector, wherein the frequency domain weight vector indicates weights of different frequency domain channels; and
    update the first time domain spectral data based on the frequency domain weight vector and the first time domain spectral data, to obtain the time domain spectral data of the dynamic scene.

8. The apparatus according to claim 6, wherein the obtaining unit is specifically configured to obtain the time domain spectral data of the dynamic scene by using a time domain spectral data collection camera.

9. A neural network model training apparatus, wherein the apparatus comprises an obtaining unit and a processing unit, wherein

    the obtaining unit is specifically configured to obtain training data, wherein the training data is time domain spectral data $X(\omega, x, y)$ of a dynamic scene, wherein $\omega$ indicates a frequency domain dimension of the dynamic scene along a time direction, and $x$ and $y$ indicate spatial dimensions of the dynamic scene; and
    the processing unit is specifically configured to train a to-be-trained neural network model based on the training data.

10. The apparatus according to claim 9, wherein the processing unit is specifically configured to:

    train the to-be-trained neural network model based on the training data, to obtain a first loss function;
    train a frequency domain channel selection model based on a constraint term and the training data, to output a frequency domain weight vector, wherein the frequency domain weight vector indicates weights of different frequency domain channels, and the constraint term comprises the first loss function;
    update the training data based on the frequency domain weight vector and the training data; and
    train the to-be-trained neural network model based on updated training data and the frequency domain weight vector, to obtain an updated first loss function.

11. A dynamic scene processing apparatus, comprising a processor and a memory, wherein the memory is configured to store program instructions, and the processor is configured to invoke the program instructions to perform the method according to any one of claims 1 to 3.

12. A neural network model training apparatus, comprising a processor and a memory, wherein the memory is configured to store program instructions, and the processor is configured to invoke the program instructions to perform the method according to claim 4 or 5.

13. A computer-readable storage medium, wherein the computer-readable medium stores program code executed by a device, and the program code is used to perform the method according to any one of claims 1 to 3 or claim 4 or 5.

14. A chip, wherein the chip comprises a processor and a data interface, and the processor reads, through the data interface, instructions stored in a memory, to perform the method according to any one of claims 1 to 3 or claim 4 or 5.

IT value chain

Smart information chain

Smart product and industry application

General capability

Translation/Text analysis/...

Voice/Visual/Image/...

Data processing

Data training/Machine learning/Deep learning

Search/Inference/Decision-making

...

Data

Infrastructure

Sensor

Smart chip

Basic platform

...

FIG. 1

Processing result

Output layer 240

Neural network layer 230

Hidden layer n (23n)

⋮

Hidden layer 2 (232)

Hidden layer 1 (231)

Convolutional layer/Pooling layer 220

226

225

224

223

222

221

Convolutional neural network 200

Input layer 210

To-be-processed data

FIG. 2

FIG. 3

Cloud data center

Training
apparatus 410

Cloud
service
platform

Cloud
environment

Cloud service for
training a neural
network

Purchase a
cloud service

Provide the cloud
service for training
the neural network

User

(a)

Cloud environment

Training apparatus 410

To-be-trained neural
network model and a
training set

Target neural
network model

User

(b)

FIG. 4

S501: Obtain training data, where the training data is time domain spectral data $X(\omega, x, y)$ of a dynamic scene, where $\omega$ indicates a frequency domain dimension of the dynamic scene along a time direction, and x and y indicate spatial dimensions of the dynamic scene

S502: Train a to-be-trained neural network model based on the training data

FIG. 5

S601: Obtain time domain spectral data $X(\omega, x, y)$ of a dynamic scene, where $\omega$ indicates a frequency domain dimension of the dynamic scene along a time direction, and x and y indicate spatial dimensions of the dynamic scene

S602: Use the time domain spectrum data as an input of a neural network model, to obtain a processing result of the dynamic scene

FIG. 6

S701: Obtain training data, where the training data is time domain spectral data $X(\omega, x, y)$ of a dynamic scene, where $\omega$ indicates a frequency domain dimension of the dynamic scene along a time direction, and x and y indicate spatial dimensions of the dynamic scene

S702: Train a frequency domain channel selection model based on a constraint term and the training data, to output a frequency domain weight vector, where the frequency domain weight vector indicates weights of different frequency domain channels, and the constraint term includes a first loss function

S703: Update the training data based on the frequency domain weight vector and the training data

S704: Train a to-be-trained neural network model based on updated training data and the frequency domain weight vector, to obtain an updated first loss function

FIG. 7

FIG. 8

FIG. 9

FIG. 10

FIG. 11

EP 4 394 699 A1

S1201: Obtain first time domain spectral data

S1202: Use the first time domain spectral data as an input of a frequency domain channel selection model, to obtain a frequency domain weight vector, where the frequency domain weight vector indicates weights of different frequency domain channels

S1203: Update the first time domain spectral data based on the frequency domain weight vector and the first time domain spectral data, to obtain time domain spectral data of a dynamic scene

S1204: Use the time domain spectral data of the dynamic scene as an input of a neural network model, to obtain a processing result of the dynamic scene

FIG. 12

Common two-dimensional array camera

Dynamic scene

Video data

Imaging lens

Two-dimensional detector array

FIG. 13

FIG. 14

FIG. 15

First time domain
spectral data

Trained frequency
domain channel
selection model

Frequency
domain weight
vector

⊗

Time domain spectral
data of video data

Neural
network
model

Processing
result

FIG. 16

Training apparatus 3000

Obtaining unit 3010

Processing unit 3020

FIG. 17

Dynamic scene processing
apparatus 4000

Obtaining unit 4010

Processing unit 4020

FIG. 18

Training apparatus 5000

Memory 5001

Processor 5002

Bus 5004

Communication interface 5003

FIG. 19

Dynamic scene processing apparatus 6000

Memory 6001

Processor 6002

Bus 6004

Communication interface 6003

FIG. 20

## INTERNATIONAL SEARCH REPORT

International application No.

**PCT/CN2023/086772**

| A. | CLASSIFICATION OF SUBJECT MATTER |
|---|---|

G06T 7/207(2017.01)i

According to International Patent Classification (IPC) or to both national classification and IPC

| B. | FIELDS SEARCHED |
|---|---|

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNABS; CNTXT; DWPI; VEN; USTXT; WOTXT; EPTXT; CNKI; IEEE; ISI: 动态场景, 视频, 时间, 时域, 频谱, 频域, 频率, 空间, 空域, 像素, 神经网络, 卷积网络, 模型, 训练, 分类, 识别, 检测, dynamic scene, video, time, time domain, spectrum, frequency domain, frequency, space, spatial domain, pixel, neural network, convolutional network, model, train, classify, recognize, detect

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | CN 105512606 A (BEIHANG UNIVERSITY) 20 April 2016 (2016-04-20) description, paragraphs 3-4 and 23-100, and figures 1-6 | 1, 3-4, 6, 8-9, 11-14 |
| X | CN 113205595 A (HUAZHONG UNIVERSITY OF SCIENCE AND TECHNOLOGY) 03 August 2021 (2021-08-03) description, paragraphs 4 and 50-103, and figures 1-9 | 1, 3-4, 6, 8-9, 11-14 |
| A | CN 111401270 A (NANJING WEIAI INFORMATION TECHNOLOGY CO., LTD.) 10 July 2020 (2020-07-10) description, paragraphs 40-68, and figures 1-2 | 1-14 |
| A | US 2016026865 A1 (EXELLS INC.) 28 January 2016 (2016-01-28) entire document | 1-14 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 June 2023** | **20 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/086772**

| Patent document cited in search report | | | Publication date (day/month/year) | Patent family member(s) | | | Publication date (day/month/year) |
|---|---|---|---|---|---|---|---|
| CN | 105512606 | A | 20 April 2016 | CN | 105512606 | B | 21 December 2018 |
| CN | 113205595 | A | 03 August 2021 | CN | 113205595 | B | 29 March 2022 |
| CN | 111401270 | A | 10 July 2020 | WO | 2021184619 | A1 | 23 September 2021 |
| US | 2016026865 | A1 | 28 January 2016 | US | 9443142 | B2 | 13 September 2016 |
| | | | | WO | 2016014930 | A2 | 28 January 2016 |
| | | | | WO | 2016014930 | A3 | 24 March 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210391409